# EUROPEAN PATENT SPECIFICATION

(11) **EP 1 165 844 B1**
(45) Date of publication and mention of the grant of the patent: **10.09.2003**
(21) Application number: 00983519.0
(22) Date of filing: 07.12.2000
(51) Int. Cl.: C21B 13/02

(54) **A DEVICE FOR PREVENTING BACK MIXTURE IN A FLUIDIZED BED REACTOR**
VORRICHTUNG ZUR VERHINDERUNG DER GEGENSTROMMISCHUNG IN EINEM FLUIDATBETTREAKTOR
DISPOSITIF POUR EMPECHER LE MELANGE A CONTRE COURANT DANS UN REACTEUR A LIT FLUIDISE

(30) Priority: 07.12.1999 KR 9955407
(43) Date of publication of application: 02.01.2002
(73) Proprietor: POHANG IRON & STEEL CO., LTD., Pohang-city 790-300 (KR); RESEARCH INSTITUTE OF INDUSTRIAL SCIENCE & TECHNOLOGY, Pohang-si, Kyungsangbook-do 790-330 (KR)
(72) Inventor: KIM, Hang-Goo, Kyungsangbuk-do (KR); JEONG, Sun-Kwang, Kyungsangbuk-do (KR); LEE, Il-Ock, Kyungsangbuk-do (KR); CHOI, Nag-Joon, Kyungsangbuk-do (KR)
(74) Representative: Ritthaler, Wolfgang, Dr.
(86) International application number: KR0001417
(87) International publication number: WO01042515

(56) References cited:
- PATENT ABSTRACTS OF JAPAN & JP 10 267 546 A (KAWASAKI HEAVY IND LTD) 09 October 1998

## Description

### BACKGROUND OF THE INVENTION

### (a) Field of the Invention

The present invention relates to a fluidized bed reduction reactor and, more particularly, to a fluidized bed reduction reactor which prevents the reacted fine iron ore from being back-mixed with the non-reacted fine iron ore.

### (b) Description of the Related Art

Generally, a blast furnace has been extensively used to make a hot metal iron through reducing and melting an iron ore. However, the blast furnace involves a drawback in that the charging materials should be pretreated to bear agglomerated forms such as sintered iron ore and cokes.

In order to solve such a problem, a smelting and reduction has been developed for the direct use of fine iron ore and coal without pre-treatment.

The smelting and reduction is based on the uses of a melter gasifier and a fluidized bed reduction reactor. The melter gasifier gasifies the coal charged therein to make a reducing gas, and melts the reduced iron fed from the fluidized bed reduction reactor. The fluidized bed reduction reactor utilizes the reducing gas generated from the melter gasifier to reduce an iron ore in an indirect manner. The fluidized bed reduction reactor is provided with a pre-heating reactor for pre-heating the iron ore charged therein, a pre-reduction reactor for reducing the iron ore fed from the pre-heating reactor, and a final reduction reactor.

Coal is continuously charged into the melter gasifier from the top, and and form a char bed therein at a predetermined height. When the coal is combusted in the presence of high pressure oxygen gas blown in from the lower part, high temperature reducing gas is generated therein, and fed to the fluidized bed reduction reactor. A reduced iron ore is also charged into the melter gasifier from the top, and melted while passing through the char bed to thereby form a molten iron.

In the fluidized bed reduction reactor, a fine iron ore at an ambient temperature is charged into the pre-heating reactor, and sequentially passes through the pre-reduction reactor and the final reduction reactor. The flow of the iron ore is made through discharge duct (stand pipe) interconnecting the each reactor. The flow of iron ore is directed toward the bottom reactor from the top reactor by its own weight.

The reducing gas is sequentially supplied to the respective reactors through gas ducts interconnecting them. The flowing direction of the reducing gas is directly opposite to that of the iron ore. That is, the reducing gas is sequentially flown into the final reduction reactor, the pre-reduction reactor, and the pre-heating reactor in turn. Since the bottom reactor bears a pressure higher than that of the top reactor, the reducing gas is flown from the bottom reactor to the top reactor.

When the iron ore passes through the above-structured fluidized bed reduction reactor, it is heated and reduced up to 90% or more by the high temperature reducing gas.

Such a fluidized bed reduction reactor involves several advantages in that the efficiencies of heat and material transfer between the fine iron ore and the reducing gas are very high, and the temperature and the concentration distribution of the iron ore are homogeneous within the fluidized bed.

The fluidized bed reduction reactor also involves a disadvantage in that the mixing of the fine iron ore in the fluidized bed is so rapid as to make the residence time of the fine iron ore therein uneven. In case the residence time of the fine iron ore is uneven in the respective reactors, a part of the fine iron ore newly charged into the relevant reactor is mixed with the reacted iron ore, and discharged into the subsequent reactor while being not fully reacted. This phenomenon is called the "back mixture" of fine iron ore. In the occurrence of such a back mixture phenomenon, the overall reduction degree of fine iron ore is seriously diminished.

It has been proposed that partition weirs should be installed at the respective reactors to prevent the back mixture phenomenon.

For instance (JP-A-10 267 546), several partition weirs can be installed above the gas distributor to divide the fluidized bed into several reaction regions. Each partition weir except the one which divide the first and the last reaction regions has a center hole for passing the charged fine iron ore. The fine iron ore sequentially passes through the holes of the first to last partition weirs while being reduced in the fluidized state at the respective reaction regions by the reducing gas blown into the reactor from the bottom.

However, since the holes of the partition weirs are somewhat not favorable for the flowing of the iron ore through the holes. Furthermore, the residence time of the iron ore in the respective reaction regions is not even so that the quality control becomes difficult.

### SUMMARY OF THE INVENTION

It is an object of the present invention to provide a fluidized bed reduction reactor which can prevent occurrence of the back mixture phenomenon while maintaining the residence time of the charged fine iron ore in a constant manner.

This and other objects may be achieved by a fluidized bed reduction reactor with a plurality of fluidized bed reactors. Each fluidized bed reactor has a gas distributor. An iron ore charging duct vertically passes through the top of the fluidized bed reactor with a free end. The free end of the iron ore charging duct is positioned close to the top center of the gas distributor. A spiral-shaped partition weir is placed over the gas distributor. The partition weir surrounds the iron ore charging duct while being spirally extended from the iron ore charging duct to an inner wall of the fluidized bed reactor. The one end of partition weir is fixed to the inner wall of the fluidized bed reactor. A discharge duct is installed at a wall of the fluidized bed reactor to discharge the fine iron ore from the fluidized bed reactor. The discharge duct is positioned near the fixed end of the partition weir.

In the above structure, the fine iron ore charged through the iron ore charging duct is fluidized and reduced while spirally moving from the center of the fluidized bed reactor to the inner wall of the fluidized bed reactor. Therefore, the back mixture phenomenon where the reacted fine iron ore is mixed with the non-reacted fine iron ore does not occur.

Furthermore, the charged fine iron ore flows along the spirally extended space surrounded by the partition weir in a sequential manner so that the residence time of the fine iron ore in the reactor can be maintained in a constant manner.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or the similar components, wherein:
Fig. 1 is a perspective view of a fluidized bed reactor for a fluidized bed reduction reactor with a back mixture prevention unit according to a preferred embodiment of the present invention; and
Fig. 2 is a plan view of the fluidized bed reactor shown in Fig. 1.

### DETAILED DESCRIPTION OF THE PREFERRED EMBODIMENTS

Preferred embodiments of this invention will be explained with reference to the accompanying drawings.

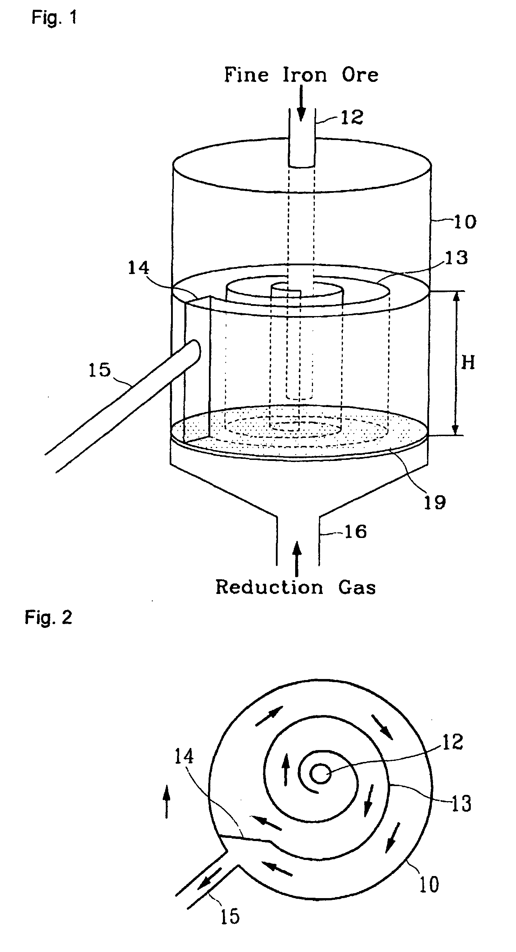

Fig. 1 illustrates a fluidized bed reactor for a fluidized bed reduction reactor with a back mixture prevention unit according to a preferred embodiment of the present invention, and Fig. 2 illustrates the flowing of the charged fine iron ore in the fluidized bed reactor shown in Fig. 1. Since all of the fluidized bed reactors have the same structure, only one fluidized bed reactor is illustrated in the drawings.

As shown in the drawings, an iron ore charging duct 12 is inserted into the fluidized bed reactor 10 with a free end while being connected to an iron ore charging bin (not shown) at its opposite end.

The iron ore charging duct 12 may pass through the top center or side portion of the fluidized bed reactor 10. The free end of the iron ore charging duct 12 is positioned directly above the center of a gas distributor 19. It is preferable that the iron ore charging duct 12 should be linearly (not bending) positioned at the vertical axis line of the fluidized bed reactor 10.

The gas distributor 19 is internally placed at the lower part of the fluidized bed reactor 10 while bearing a plurality of nozzles. The gas distributor 19 uniformly distribute the high temperature reducing gas generated from a melter gasifier (not shown) to the inner space of the fluidized bed reactor 10. A gas supply duct 16 is connected to the fluidized bed reactor 10 below the gas distributor 19 to supply the reducing gas thereto.

A spiral-shaped partition weir 13 is placed over the gas distributor 19. The partition weir 13 surrounds the iron ore charging duct 12 while being spirally extended from the iron ore charging duct 12 to the inner wall of the fluidized bed reactor 10.

The free end of the partition weir 13 is positioned close to the iron ore charging duct 12, and the opposite end thereof is fixed to the inner wall of the fluidized bed reactor 10 via a vertical plate 14. Accordingly, one continuous spirally extended channel is formed in the fluidized bed reactor 10 by way of the spiral-shaped partition weir 13.

The partition weir 13 may be spirally extended from the iron ore charging duct 12 either in the clockwise direction or in the anti-clockwise direction. Furthermore, the width of the spiral channel may be constant, or gradually increase beginning from the iron ore charging duct 12.

It is preferable that the height H of the partition weir 13 should be greater than that of the iron ore fluidized bed formed within the fluidized bed reactor 10.

A discharge duct 15 is installed at the wall of the fluidized bed reactor 10 to discharge the reacted iron ore. The discharge duct 15 is positioned between the top of the partition weir 13 and the gas distributor 19 while standing at the side of the vertical plate 14 where the flowing of the iron ore in the reactor 10 is terminated.

In operation, the reducing gas generated from the melter gasifier is supplied to the bottom of the fluidized bed reactor 10 through the gas supply duct 16, and the fine iron ore fed from the iron ore bin is charged above the gas distributor 19 through the iron ore charging duct 12.

The reducing gas and the fine iron ore are continuously fed to the fluidized bed reactor 10.

The charged iron ore moves along the spirally extended channel formed by the spiral-shaped partition weir 13 while proceeding from the center of the fluidized bed reactor 10 to the inner wall thereof. At this time, the fine iron ore forms a fluidized bed with the reducing gas blown through the gas distributor 19 while being reduced.

The charged iron ore particles are fluidized and reacted in a sequential manner so that the back mixture phenomenon does not occur.

The flow of reacted fine iron ore is blocked against the vertical weir 14, and discharged through the discharge duct 15 positioned close to the vertical weir 14.

The residence time of the fine iron ore in the fluidized bed reactor 10 may be controlled through elongating or shortening the length of the spiral-shaped partition weir 13. That is, the spiral distance of the partition weir 3 may be widened or narrowed.

The following example further illustrates the present invention.

### Example 1

The specification and experimental conditions for the fluidized bed reduction reactor were as follows.
(a) Specification of the fluidized bed reactor (the pre-heating reactor, the pre-reduction reactor, and the final reduction reactor)
   ■ Radius of the gas distributor: 0.74m
   ■ Height of the fluidized bed reactor from the surface of the gas distributor: 6.0m
   ■ Distance between the inlet of the discharge duct and the surface of the gas distributor: 1.5m
   ■ Distance between the outlet of the iron ore charging duct and the surface of the gas distributor: 0.5m
   ■ Height of the partition weir: 2.5m
   ■ Length of the partition weir: 7m
(b) Fine iron ore
   ■ Particle (grain) size of the fine iron ore: under 8 mm
   ■ Particle size distribution:
      under 0.05 mm : 4.6%, 0.05-0.15 mm: 5.4%,
      0.15-0.5 mm: 16.8%, 0.5-4.75 mm: 59.4%
      4.75-8 mm: 13.8%
   ■ Chemical composition of the fine iron ore:
      T.Fe: 62.17%, FeO: 0.51%, SiO₂: 5.5%,
      TiO₂: 0.11%, Mn: 0.05%, S: 0.012%
      P: 0.65%, crystal water: 2.32%
(c) Reducing gas
   ■ Chemical composition
      CO: 55%, H₂: 20%, CO₂: 5%, N₂: 20%
   ■ Temperature in the fluidized bed reactor: 830°C
   ■ Superficial gas velocity at the surface of gas distributor: 1.6m/s
   ■ Pressure in the fluidized bed reactor: 2.0kgf/cm²

Several experiments were carried out with the fluidized bed reactor to examine the fluidized bed reduction behavior of the fine iron ore charged therein.

The experimental results exhibited that the charging and discharging of the fine iron ore are continuously made for a long time in a uniform manner. It follows that the flow of the charged fine iron ore is uniformly made without delay while forming a fluidized bed in a stable manner.

Furthermore, when the reduction degree of the fine iron ore discharged through the discharge duct 15 was checked, it turned out that the fine iron ore was completely reduced, and the reduction degree thereof was 90% or more. It follows that the charged fine iron ore is not back-mixed while maintaining its residence time in a constant manner.

## Claims

1. A fluidized bed reduction reactor having a plurality of fluidized bed reactors (10) each with an gas distributor (19) while receiving a reducing gas from a melter gasifier, the fluidized bed reduction reactor comprising:
an iron ore charging duct (12) passing through the top of the fluidized bed reactor (10) with a free end, the free end of the iron ore charging duct (12) being positioned close to the center of the gas distributor (19);
a spiral-shaped partition weir (13) placed over the gas distributor (19), the partition weir (13) surrounding the iron ore charging duct (12) while being spirally extended from the iron ore charging duct (12) to an inner wall of the fluidized bed reactor (10), the partition weir (13) being fixed to the inner wall of the fluidized bed reactor (10); and
a discharge duct (15) installed at a wall of the fluidized bed reactor (10) to discharge the fine iron ore from the fluidized bed reactor (10), the discharge duct (15) being positioned near the fixed end of the partition weir (13);
wherein the fine iron ore charged through the iron ore charging duct (12) is fluidized to form a fluidized bed, and reduced while spirally flowing from the center of the fluidized bed reactor (10) to the inner wall of the fluidized bed reactor (10).

2. The fluidized bed reduction reactor of claim 1 wherein the partition weir (13) is spirally extended from the iron ore charging duct (12) to the inner wall of the fluidized bed reactor (10) either in the clockwise direction or in the anti-clockwise direction.

3. The fluidized bed reduction reactor of claim 1 or 2 wherein the partition weir (13) is greater in height than the fluidized bed formed in the fluidized bed reactor (10).

## Patentansprüche

1. Wirbelschicht-Reduktionsreaktor, der eine Vielzahl von Wirbelschichtreaktoren (10) mit jeweils einem Gasverteiler (19) aufweist und ein Reduktionsgas aus einem Einschmelzvergaser erhält, wobei der Wirbelschicht-Reduktionsreaktor umfaßt:
ein Eisenerz-Beschickungsrohr (12) mit einem freien Ende, das durch die Oberseite des Wirbelschichtreaktors (10) hindurchgeht, wobei das freie Ende des Eisenerz-Beschickungsrohrs (12) nahe der Mitte des Gasverteilers (19) positioniert ist;
eine spiralförmige Trennbarriere (13), die auf dem Gasverteiler (19) angebracht ist, wobei die Trennbarriere (13) das Eisenerz-Beschickungsrohr (12) umgibt und spiralförmig vom Eisenerz-Beschickungsrohr (12) zu einer Innenwand des Wirbelschichtreaktors (10) verläuft, wobei die Trennbarriere (13) an der Innenwand des Wirbelschichtreaktors (10) befestigt ist; und
ein Austragsrohr (15), das an einer Wand des Wirbelschichtreaktörs (10) angebracht ist, um das Feineisenerz aus dem Wirbelschichtreaktor (10) auszubringen, wobei das Austragsrohr (15) nahe dem befestigten Ende der Trennbarriere (13) positioniert ist;
wobei das Feineisenerz, das durch das Eisenerz-Beschickungsrohr (12) eingetragen wird, unter Bildung einer Wirbelschicht aufgewirbelt und reduziert wird, während es spiralförmig von der Mitte des Wirbelschichtreaktors (10) zur Innenwand des Wirbelschichtreaktors (10) strömt.

2. Wirbelschicht-Reduktionsreaktor nach Anspruch 1, wobei die Trennbarriere (13) entweder im Uhrzeigersinn oder im Gegenuhrzeigersinn spiralförmig vom Beschickungsrohr (12). zur Innenwand des Wirbelschichtreaktors (10) verläuft.

3. Wirbelschicht-Reduktionsreaktor nach Anspruch 1 oder 2, wobei die Höhe der Trennbarriere (13) größer ist als die Wirbelschicht, die in dem Wirbelschichtreaktor (10) gebildet wird.

## Revendications

1. Réacteur de réduction à lit fluidisé possédant une pluralité de réacteurs à lit fluidisé (10), comprenant chacun un distributeur de gaz (19) tout en recevant un gaz réducteur provenant d'un gazéifieur-mélangeur, le réacteur de réduction à lit fluidisé comprenant :
un conduit de chargement en minerai de fer (12) traversant le sommet du réacteur à lit fluidisé (10) avec une extrémité libre, l'extrémité libre du conduit de chargement en minerai de fer (12) étant positionnée à proximité du centre du distributeur de gaz (19),
un déversoir de séparation en forme de spirale (13) placé sur le distributeur de gaz (19), le déversoir de séparation (13) entourant le conduit de chargement en minerai de fer (12) tout en s'étendant en spirale du conduit de chargement en minerai de fer (12) à une paroi intérieure de réacteur à lit fluidisé (10), le déversoir de séparation (13) étant fixé à la paroi intérieure du réacteur à lit fluidisé (10), et
un conduit de décharge (15) installé au niveau d'une paroi du réacteur à lit fluidisé (10) pour décharger le minerai de fer fin du réacteur à lit fluidisé (10), le conduit de décharge (15) étant positionné près de l'extrémité fixe du déversoir de séparation (13);
dans lequel le minerai de fer fin chargé au travers du conduit de chargement en minerai de fer (12) est fluidisé de façon à former un lit fluidisé, et est réduit tout en circulant en spirale depuis le centre du réacteur à lit fluidisé (10) jusqu'à la paroi intérieure du réacteur à lit fluidisé (10).

2. Réacteur de réduction à lit fluidisé selon la revendication 1, dans lequel le déversoir de séparation (13) s'étend en spirale depuis le conduit de chargement en minerai de fer (12) jusqu'à la paroi intérieure du réacteur à lit fluidisé (10) soit dans le sens des aiguilles d'une montre, soit dans le sens inverse des aiguilles d'une montre.

3. Réacteur de réduction à lit fluidisé selon la revendication 1 ou 2, dans lequel le déversoir de séparation (13) présente une hauteur supérieure à celle du lit fluidisé formé dans le réacteur à lit fluidisé (10).
